(19) Europäisches Patentamt European Patent Office Office européen des brevets

(11) **EP 2 725 448 A2**

(12) **EUROPEAN PATENT APPLICATION**

(43) Date of publication:
30.04.2014 Bulletin 2014/18

(51) Int Cl.:
*G06F 1/16* (2006.01)

(21) Application number: 13190088.8

(22) Date of filing: 24.10.2013

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **24.10.2012 JP 2012235192** | (71) Applicant: **NITTO DENKO CORPORATION Ibaraki-shi, Osaka 567-8680 (JP)**<br><br>(72) Inventor: **Mase, Takuya Osaka, 567-8680, (JP)**<br><br>(74) Representative: **Schwabe - Sandmair - Marx Patentanwälte Stuntzstraße 16 81677 München (DE)** |

(54) **Reinforcing structure of image display device and producing method of image display device**

(57)    A reinforcing structure of an image display device includes reinforcement of an image display device by interposing a pressure-sensitive adhesive sheet having a tensile elastic modulus (JIS K-6251) at 23°C of 0.2 MPa or more and 10 MPa or less in a gap between a first member and a second member provided in the image display device and disposed in opposed relation to each other so as to be in contact with the first member and the second member.

FIG.1

## Description

The present application claims priority from Japanese Patent Application No. 2012-235192 filed on October 24, 2012.

BACKGROUND OF THE INVENTION

Field of the Invention

The present invention relates to a reinforcing structure of an image display device and a method for producing the image display device, to be specific, to a reinforcing structure of an image display device including a notebook computer or the like and a method for producing the image display device.

Description of Related Art

An image display device mounted with an image display unit including a liquid crystal panel, a plasma display panel, an electro-luminescence panel, or the like is usually used for various electrical devices such as computer displays of notebook computers or the like, cellular phones, and game machines and is used in wide fields.

Such an image display device is, in view of portability, required to have excellent lightweight properties and high strength. As the image display device having excellent lightweight properties and high strength, an image display device in which a reinforcing sheet is disposed between an image display unit and a casing that houses the image display unit has been proposed (ref: for example, Japanese Unexamined Patent Publication No. 2007-313879).

The reinforcing sheet used in Japanese Unexamined Patent Publication No. 2007-313879 includes a resin layer and a constraining layer that is laminated on one surface thereof and is made of a glass cloth.

In Japanese Unexamined Patent Publication No. 2007-313879, the resin layer in the reinforcing sheet is heated to a high temperature to be stuck to the image display unit or the casing, so that the image display device is reinforced.

SUMMARY OF THE INVENTION

In the image display device in Japanese Unexamined Patent Publication No. 2007-313879, however, the one surface of the reinforcing sheet is the constraining layer, so that the reinforcing sheet is not fixed to the image display unit or the casing at the one surface thereof. Thus, the strength may not be sufficiently developed.

Also, the image display device includes the image display unit having low heat resistance and when the reinforcing sheet is heated to a high temperature, the image display unit may be damaged. Thus, the image display device is required to be reinforced at a low temperature to suppress damage to the image display device.

It is an object of the present invention to provide a reinforcing structure of an image display device having excellent lightweight properties and high strength and in which damage to an image display device due to a thermal load is suppressed and a method for producing the image display device.

A reinforcing structure of an image display device of the present invention includes reinforcement of an image display device by interposing a pressure-sensitive adhesive sheet having a tensile elastic modulus (JIS K-6251) at 23°C of 0.2 MPa or more and 10 MPa or less in a gap between a first member and a second member provided in the image display device and disposed in opposed relation to each other so as to be in contact with the first member and the second member.

In the reinforcing structure of an image display device of the present invention, it is preferable that the pressure-sensitive adhesive sheet contains a thermoplastic elastomer.

In the reinforcing structure of an image display device of the present invention, it is preferable that the thermoplastic elastomer is a polymer of a monomer containing styrene.

In the reinforcing structure of an image display device of the present invention, it is preferable that the pressure-sensitive adhesive sheet further contains a filler and a tackifier.

In the reinforcing structure of an image display device of the present invention, it is preferable that the size of the gap is 1 mm or less.

In the reinforcing structure of an image display device of the present invention, it is preferable that the image display device is a notebook computer.

In the reinforcing structure of an image display device of the present invention, it is preferable that the first member is made of a metal and the second member is made of a resin.

In the reinforcing structure of an image display device of the present invention, it is preferable that the first member is an image display unit and the second member is made of a resin.

In the reinforcing structure of an image display device of the present invention, it is preferable that the first member is an image display unit and the second member is made of a metal.

In the reinforcing structure of an image display device of the present invention, it is preferable that the first member and the second member are made of a metal.

In the reinforcing structure of an image display device of the present invention, it is preferable that the first member and the second member are made of a resin.

In the reinforcing structure of an image display device of the present invention, it is preferable that the resin contains a polycarbonate and an acrylonitrile-butadiene-styrene copolymer, or an alloy of polycarbonate and acrylonitrile-butadiene-styrene copolymer.

In the reinforcing structure of an image display device of the present invention, it is preferable that one surface of the pressure-sensitive adhesive sheet is stuck to the first member and next, the second member is laminated by injecting and molding the resin at the other surface of the pressure-sensitive adhesive sheet.

A method for producing an image display device of the present invention includes the steps of preparing a pressure-sensitive adhesive sheet having a tensile elastic modulus (JIS K-6251) at 23°C of 0.2 MPa or more and 10 MPa or less, and reinforcing an image display device by interposing the pressure-sensitive adhesive sheet in a gap between a first member and a second member provided in the image display device and disposed in opposed relation to each other so as to be in contact with the first member and the second member.

According to the reinforcing structure of an image display device of the present invention, the image display device is reinforced by interposing the pressure-sensitive adhesive sheet having a tensile elastic modulus (JIS K-6251) at 23°C of 0.2 MPa or more and 10 MPa or less in a gap between the first member and the second member that are provided in the image display device and are disposed in opposed relation to each other so as to be in contact with the first member and the second member. Thus, in the reinforcing structure of the image display device, the first member and the second member are surely fixed by the pressure-sensitive adhesive sheet, so that the strength is increased.

According to the reinforcing structure of an image display device of the present invention, a member having an easy structure, that is, the pressure-sensitive adhesive sheet is used, so that the thinning and the weight reduction of the image display device are achieved and the image display device is reinforced.

According to the reinforcing structure of an image display device of the present invention, the pressure-sensitive adhesive sheet is used, so that the image display device is capable of being reinforced at a normal temperature. As a result, damage to the image display device due to a thermal load is suppressed.

According to the method for producing an image display device of the present invention, the image display device having excellent lightweight properties and high strength is capable of being produced, while damage thereto due to a thermal load is suppressed.


BRIEF DESCRIPTION OF THE DRAWINGS

FIG. 1 shows an exploded perspective view of one embodiment of a reinforcing structure of an image display device of the present invention.
FIG. 2 shows a sectional view of the reinforcing structure shown in FIG. 1.
FIG. 3 shows a sectional view of another embodiment of a reinforcing structure of an image display device of the present invention.
FIG. 4 shows another embodiment of a reinforcing structure of an image display device of the present invention:

FIG. 4 (a) illustrating an exploded perspective view and
FIG. 4 (b) illustrating a sectional view.

FIG. 5 shows a sectional view of another embodiment of a reinforcing structure of an image display device of the present invention.


DETAILED DESCRIPTION OF THE INVENTION

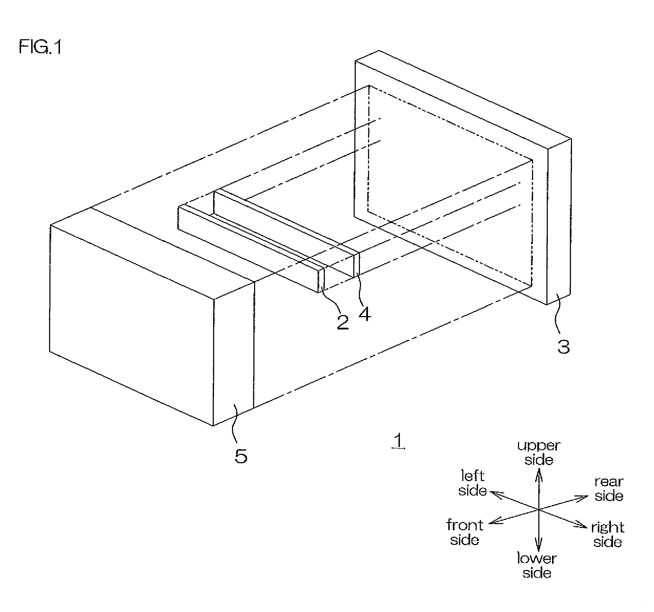

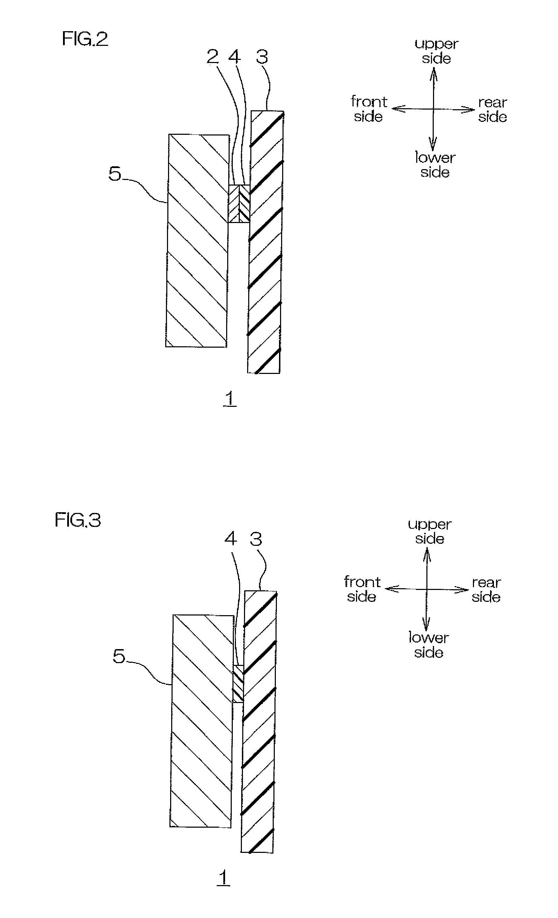

Directions in each figures are in conformity with the direction arrows in FIG. 1 and in FIG. 2, the up-down direction of the paper surface is referred to as "an up-down direction (a first direction)"; the right-left direction of the paper surface is referred to as "a front-rear direction (a second direction)"; and the depth direction of the paper surface is referred to as "a right-left direction (a third direction)".

As shown in FIGS. 1 and 2, an image display device 1 is provided with a casing 3 as a second member; an image display unit 5 that is disposed in opposed relation to the front side of the casing 3; a metal support board 2, which is provided between the casing 3 and the image display unit 5, as a first member; and a pressure-sensitive adhesive sheet 4.

The casing 3 is provided at the rear end portion of the image display device 1; is formed into a generally rectangular shape in front view, and is formed from, for example, a resin or the like.

An example of the resin includes a thermoplastic resin. Examples of the thermoplastic resin include a polycarbonate (PC), an acrylonitrile-butadiene-styrene copolymer (ABS), polyvinyl chloride, and an acrylic resin.

These resins can be used alone or in combination of two or more.

Of these, in view of lightweight properties and impact resistance, preferably, a polycarbonate is used alone and a polycarbonate and an ABS are used in combination, or more preferably, a polycarbonate is used alone.

The casing 3 has a thickness of, for example, 0.5 mm or more, or preferably 1 mm or more, and of, for example, 5 mm or less, or preferably 3 mm or less. When the thickness of the casing 3 satisfies the above-described range, the strength of the image display device 1 is sufficiently developed by laminating the casing 3 and the pressure-sensitive adhesive sheet 4 (described later).

The image display unit 5 is formed into a generally rectangular shape in front view and is provided at the front surface of the casing 3. The image display unit 5 is, when projected in the front-rear direction (the thickness direction), disposed so as to be included in the casing 3, to be more specific, to expose the left end portion, the right end portion, the upper end portion, and the lower end portion (the circumference end portion) of the casing 3. That is, the image display unit 5 is, when projected in the front-rear direction, disposed in the central portion of the casing 3.

The image display unit 5 is composed of a liquid crystal display (not shown) and a back light unit (not shown). The liquid crystal display is composed of a liquid crystal panel and a display driving circuit.

The metal support board 2 is interposed between the casing 3 and the image display unit 5 and is provided so that the front surface thereof is in contact with the rear surface of the image display unit 5. The metal support board 2 is fixed to the image display unit 5 with, for example, a fixing member such as a screw (not shown). The metal support board 2 is disposed in opposed relation to the front side of the casing 3.

The metal support board 2 is, in front view, formed into a generally rectangular shape extending in the right-left direction. The metal support board 2 is formed of, for example, a metal such as aluminum (Al), iron, copper, or stainless steel.

As shown by phantom lines in FIG. 1, the metal support board 2 is, when projected in the front-rear direction (the thickness direction), disposed so as to be included in the image display unit 5, to be more specific, to expose the left end portion, the right end portion, the upper end portion, and the lower end portion (the circumference end portion) of the image display unit 5. That is, the metal support board 2 is, when projected in the front-rear direction of the metal support board 2, disposed in the central portion in the right-left direction and in the slightly upper central portion in the up-down direction of the image display unit 5.

The metal support board 2 has a thickness of, for example, 0.05 mm or more, or preferably 0.1 mm or more, and of, for example, 2 mm or less, or preferably 1 mm or less.

The pressure-sensitive adhesive sheet 4 is, when projected in the front-rear direction, overlapped with the metal support board 2 and to be specific, is formed into the same shape as that of the metal support board 2.

The pressure-sensitive adhesive sheet 4 is, in the front-rear direction (the thickness direction), disposed in a gap between the metal support board 2 and the casing 3. To be specific, the pressure-sensitive adhesive sheet 4 is interposed so as to be in contact with the metal support board 2 and the casing 3. That is, the front surface (the one surface in the thickness direction) of the pressure-sensitive adhesive sheet 4 is stuck to the rear surface of the metal support board 2 and the rear surface (the other surface in the thickness direction) of the pressure-sensitive adhesive sheet 4 is stuck to the front surface of the casing 3.

The pressure-sensitive adhesive sheet 4 has pressure-sensitive adhesive properties at a normal temperature (25°C) and is formed from a pressure-sensitive adhesive composition into a sheet shape.

The pressure-sensitive adhesive composition contains, for example, a thermoplastic elastomer.

The thermoplastic elastomer contains, for example, a hydrogenated polymer of a monomer containing conjugated dienes.

The monomer contains, for example, the conjugated dienes as an essential component and a copolymerizable monomer that is copolymerizable with the conjugated dienes as an arbitrary component.

Examples of the conjugated dienes include 1,3-butadiene, isoprene (2-methyl-1,3-butadiene), and chloroprene (2-chloro-1,3-butadiene).

As the copolymerizable monomer, a monomer having at least one double bond is used. Examples thereof include an aliphatic vinyl monomer (olefins) such as ethylene, propylene, and isobutylene (2-methylpropene); an aromatic vinyl monomer such as styrene; and a cyano group-containing vinyl monomer such as (meth)acrylonitrile.

These copolymerizable monomers can be used alone or in combination of two or more. Preferably, an aromatic vinyl monomer is used, or more preferably, styrene is used. That is, preferably, the thermoplastic elastomer contains a polymer of a monomer containing an aromatic vinyl monomer (styrene, in particular). In this way, the strength becomes excellent.

To be specific, examples of the copolymerizable monomer include a block or random copolymer of the conjugated dienes and the copolymerizable monomer. Preferably, a block copolymer is used. To be specific, a styrene-butadiene-styrene block copolymer and a styrene-isoprene-styrene block copolymer are used.

The mixing ratio of the copolymerizable monomer with respect to 100 parts by mass of the conjugated dienes is, for example, 5 parts by mass or more, or preferably 15 parts by mass or more, and is, for example, 80 parts by mass or less, or preferably 50 parts by mass or less.

That is, the mixing ratio of the copolymerizable monomer (preferably, an aromatic vinyl monomer, or more preferably, styrene) to the conjugated dienes (preferably, butadiene or isoprene) is, by mass basis, for example, 50 mass % or less / 50 mass % or more (the mass ratio of the copolymerizable monomer to the conjugated dienes), or preferably 40 mass % or less / 60 mass % or more, and is usually 10 mass % or more / 90 mass % or less. In other words, the mixing ratio of the copolymerizable monomer with respect to the total amount of the conjugated dienes and the copolymerizable monomer is, for example, 50 mass % or less, or preferably 40 mass % or less, and is usually 10 mass % or more.

In the above-described hydrogenated polymer, unsaturated bonds (double bond portions) derived from the conjugated dienes are completely hydrogenated or partially hydrogenated. Preferably, unsaturated bonds are completely hydrogenated. To be specific, examples of the hydrogenated polymer include a styrene-ethylene-butylene-styrene copolymer (an SEBS, to be more specific, an SEBS block copolymer) and a styrene-ethylene-propylene-styrene copolymer (an SEPS, to be more specific, an SEPS block copolymer).

The hydrogenated polymer does not substantially contain the unsaturated bond by the above-described hydrogenation of the polymer, so that the hydrogenated polymer is difficult to be thermally deteriorated under a high temperature atmosphere and thus, the heat resistance of the pressure-sensitive adhesive sheet 4 is capable of being improved.

The hydrogenated polymer has a weight average molecular weight (GPC calibrated with polystyrene) of, for example, 20,000 or more, or preferably 25,000 or more, and of, for example, 1,00,000 or less.

The hydrogenated polymer has a melt flow rate (MFR) at a temperature of 190°C and the mass of 2.16 kg of, for example, 10 g/10 min or less, or preferably 5 g/10 min or less, and of usually 0.1 g/10 min or more.

The hydrogenated polymer has a melt flow rate (MFR) at a temperature of 200°C and the mass of 5 kg of, for example, 50 g/10 min or less, or preferably 20 g/10 min or less, and of usually 0.1 g/10 min or less.

These hydrogenated polymers can be used alone or in combination of two or more.

Of the hydrogenated polymers, preferably, an SEBS is used.

Preferably, a tackifier is further contained in the pressure-sensitive adhesive composition.

The tackifier is contained in the pressure-sensitive adhesive composition so as to improve the adhesiveness between the pressure-sensitive adhesive sheet 4, and the metal support board 2 and the casing 3, or to improve the reinforcing properties at the time of reinforcement of the image display device 1.

Examples of the tackifier include a rosin resin, a terpene resin (including a terpene phenol copolymer (a terpene modified phenol resin), a hydrogenated terpene resin, and the like), a coumarone-indene resin, an alicyclic saturated hydrocarbon resin, a petroleum resin (for example, a hydrocarbon petroleum resin such as an aliphatic/aromatic copolymerizable petroleum resin and an aromatic petroleum resin), and a phenol resin.

The tackifier has a softening point of, for example, 50°C or more, or preferably 70°C or more and of, for example, 150°C or less, or preferably 130°C or less. The softening point of the tackifier is measured by a ring and ball test.

The tackifier has a glass transition point of, for example, 0°C or more, or preferably 20°C or more, and of, for example, 100°C or less, or preferably 60°C or less. The glass transition point is measured by a DSC method or the like.

In addition, the tackifier has a weight average molecular weight of, for example, 100 or more, or preferably 200 or more and of, for example, 10,000 or less, or preferably 2,000 or less. The weight average molecular weight of the tackifier is determined by a GPC method using standard polystyrene (PS) in calibration.

These tackifiers can be used alone or in combination of two or more.

Of the tackifiers, preferably, in view of compatibility with the hydrogenated polymer, a terpene resin and an alicyclic saturated hydrocarbon resin are used.

The mixing ratio of the tackifier with respect to 100 parts by mass of the thermoplastic elastomer is, for example, 40 parts by mass or more, or preferably 50 parts by mass or more, and is, for example, 200 parts by mass or less, or preferably 170 parts by mass or less.

When the mixing proportion of the tackifier is below the above-described range, there may be a case where the adhesiveness between the pressure-sensitive adhesive sheet 4, and the metal support board 2 and the casing 3 is not sufficiently improved or the reinforcing properties at the time of reinforcement of the image display device 1 are not capable of being sufficiently improved. On the other hand, when the mixing proportion of the tackifier is above the above-described range, the pressure-sensitive adhesive sheet 4 may become fragile.

In addition to the above-described components, an additive can be also added to the pressure-sensitive adhesive composition at an appropriate proportion. Examples of the additive include a filler, an oxidation inhibitor, a softener (for example, naphthenic oil, paraffinic oil, and the like), a thixotropic agent (for example, montmorillonite and the like), a lubricant (for example, stearic acid and the like), a pigment, an antiscorching agent, a stabilizer, an antioxidant, an ultraviolet absorber, a colorant, a fungicide, and a flame retardant.

Examples of the filler include magnesium oxide, calcium carbonate (for example, heavy calcium carbonate, light calcium carbonate, Hakuenka, and the like), magnesium silicate (for example, talc and the like), mica, clay, mica powder, bentonite (for example, organic bentonite and the like), silica, alumina, aluminum hydroxide, aluminum silicate, titanium oxide, carbon black (for example, insulating carbon black, acetylene black, and the like), aluminum powder, and glass balloon. These fillers can be used alone or in combination of two or more. Preferably, calcium carbonate and carbon black are used.

The addition ratio of the filler with respect to 100 parts by mass of the thermoplastic elastomer is, for example, 1 part by mass or more, or preferably 50 parts by mass or more, and is, for example, 200 parts by mass or less, or preferably 180 parts by mass or less.

When the content proportion of the filler satisfies the above-described range, the pressure-sensitive adhesive properties are excellently retained.

The pressure-sensitive adhesive composition can be prepared by blending the above-described components at the above-described mixing proportion. Furthermore, in order to form the pressure-sensitive adhesive sheet 4, a method is used in which the above-described components are dissolved or dispersed in a known solvent (for example, toluene and the like) or water at the above-described mixing proportion to prepare a solution or a dispersion liquid and thereafter, the obtained solution or dispersion liquid is applied to the surface of a release film to be then dried.

Also, in order to form the pressure-sensitive adhesive sheet 4 by preparing the pressure-sensitive adhesive composition, the above-described components (excluding the above-described solvent and water) are directly kneaded with, for example, a mixing roll, a pressurized kneader, an extruder, or the like to prepare a kneaded product and then, the obtained kneaded product is molded into a sheet shape by, for example, a calender molding, an extrusion molding, a press molding, or the like. To be specific, the kneaded product is disposed between two pieces of release films (described later) to be sandwiched therebetween and thereafter, the resulting product is extended by applying pressure into a sheet shape by, for example, the press molding.

The pressure-sensitive adhesive sheet 4 formed in this manner has a thickness of, for example, 3 mm or less, preferably 1 mm or less, or more preferably 0.5 mm or less, and of, for example, 0.05 mm or more, preferably 0.1 mm or more, or more preferably 0.2 mm or more.

The pressure-sensitive adhesive sheet 4 formed in the above-described manner has a tensile elastic modulus at 23°C with the thickness of 2 mm of, for example, 0.2 MPa or more, preferably 0.5 MPa or more, or more preferably 1 MPa or more, and of, for example, 10 MPa or less, preferably 5 MPa or less, or more preferably 2.5 MPa or less.

When the tensile elastic modulus is below the above-described range, the strength of the image display device 1 is not capable of being sufficiently developed. On the other hand, when the tensile elastic modulus is above the above-described range, an initial adhesion defect occurs.

The tensile elastic modulus is measured in conformity with JIS K-6251 (revised in 2004). To be specific, the thickness of the pressure-sensitive adhesive sheet 4 is adjusted to 2 mm to be then stamped out into a dumbbell-shaped test piece (No. 1) specified in JIS K-6251. Then, a measurement (at 23°C) is performed in conformity with JIS K-6251 (revised in 2004), so that a stress-strain diagram is drawn. The tensile elastic modulus (E) can be calculated from the following relational equation of the stress ($\sigma$), the strain ($\varepsilon$), and the tensile elastic modulus (E).

$$\sigma = E \times \varepsilon$$

In the pressure-sensitive adhesive sheet 4 obtained by the above-described producing method, a release film (a separator) can be stuck to the one surface or both surfaces thereof as required until it is actually used.

An example of the release film includes a known release film such as a synthetic resin film including a polyethylene film, a polypropylene film, and a PET film.

Next, a method for producing the image display device 1 is described.

In this method, for example, first, the casing 3 and the pressure-sensitive adhesive sheet 4 are prepared. Next, the rear surface of the pressure-sensitive adhesive sheet 4 is brought into contact with the front surface of the casing 3 in the above-described arrangement, so that the pressure-sensitive adhesive sheet 4 is stuck to the casing 3. To be specific, the pressure-sensitive adhesive sheet 4 is stuck to the casing 3 at a normal temperature (15 to 35°C).

On the other hand, the metal support board 2 is prepared; the front surface thereof is brought into contact with the rear surface of the image display unit 5 in the above-described arrangement; and the metal support board 2 is fixed to the image display unit 5 with a fixing member.

Next, the front surface of the pressure-sensitive adhesive sheet 4 to which the casing 3 is stuck is brought into contact with the rear surface of the metal support board 2 that is fixed to the image display unit 5 in the above described arrangement to be stuck. To be specific, the pressure-sensitive adhesive sheet 4 is stuck to the metal support board 2 at a normal temperature.

In this way, in the image display device 1, the pressure-sensitive adhesive sheet 4 is interposed in a gap between the metal support board 2 and the casing 3 that are disposed in opposed relation to each other so that the pressure-sensitive adhesive sheet 4 is in contact with the metal support board 2 and the casing 3. In this way, the reinforcing structure in which the casing 3 is reinforced by the pressure-sensitive adhesive sheet 4 and the metal support board 2 is made.

The size of the gap is the same as the thickness of the pressure-sensitive adhesive sheet 4.

By setting the size of the gap to be 3 mm or less, or particularly 1 mm or less, the thinning of the image display device 1 is capable of being achieved. On the other hand, by setting the size of the gap to be 0.05 mm or more, or particularly 0.1 mm or more, the reinforcing effect by the pressure-sensitive adhesive sheet 4 is capable of being sufficiently developed.

The image display device 1 obtained by the reinforcement has excellent lightweight properties and high strength and damage to the image display device 1 due to a thermal load is suppressed.

The image display device 1 has a bending strength (the measurement method is described in detail later in Examples) at a displacement of 2 mm in the front-rear direction of, for example, 20 N or more, preferably 25 N or more, or more preferably 30 N or more, and of, for example, 60 N or less.

The image display device 1 is, for example, used for various electrical devices such as computer displays of notebook computers or the like, cellular phones, and game machines. Preferably, the image display device 1 is used for notebook computers.

The reinforcing structure of the image display device 1 includes reinforcement of the image display device 1 by interposing the pressure-sensitive adhesive sheet 4 having a tensile elastic modulus (JIS K-6251) at 23°C of 0.2 MPa or more and 10 MPa or less in a gap between the metal support board 2 and the casing 3 that are provided in the image display device 1 and are disposed in opposed relation to each other so as to be in contact with the metal support board 2 and the casing 3.

Thus, in the reinforcing structure of the image display device 1, the metal support board 2 and the casing 3 are surely fixed by the pressure-sensitive adhesive sheet 4, so that the strength is increased.

According to the reinforcing structure of the image display device 1, a member having an easy structure, that is, the pressure-sensitive adhesive sheet 4 is used, so that the thinning and the weight reduction of the image display device 1 are achieved and the image display device 1 is reinforced.

According to the reinforcing structure of the image display device 1, the pressure-sensitive adhesive sheet 4 is used, so that the image display device 1 is capable of being reinforced at a normal temperature. As a result, damage to the image display device 1 due to a thermal load is suppressed.

The method for producing the image display device 1 includes a step of reinforcing the image display device 1 by interposing the pressure-sensitive adhesive sheet 4 having a tensile elastic modulus (JIS K-6251) at 23°C of 0.2 MPa or more and 10 MPa or less in a gap between the metal support board 2 and the casing 3 that are provided in the image display device 1 and are disposed in opposed relation to each other so as to be in contact with the metal support board 2 and the casing 3. Thus, the image display device 1 having excellent lightweight properties and high strength is capable of being produced, while damage thereto due to a thermal load is suppressed.

According to the above-described producing method, the pressure-sensitive adhesive sheet 4 is first stuck to the casing 3 and thereafter, the pressure-sensitive adhesive sheet 4 is stuck to the metal support board 2. Alternatively, for example, the pressure-sensitive adhesive sheet 4 is first stuck to the metal support board 2 and thereafter, the pressure-sensitive adhesive sheet 4 is also capable of being stuck to the casing 3. In such a case, the pressure-sensitive adhesive sheet 4 is stuck to the metal support board 2 to which the image display unit 5 is fixed in advance and thereafter, the pressure-sensitive adhesive sheet 4 is stuck to the casing 3.

In the above-described producing method, when the pressure-sensitive adhesive sheet 4 is stuck to the metal support board 2, the heating is not performed. Alternatively, the heating may be performed. Preferably, in order to suppress a thermal load with respect to the image display device 1, the pressure-sensitive adhesive sheet 4 is stuck to the metal support board 2 without heating (that is, in a state at a normal temperature).

When the pressure-sensitive adhesive sheet 4 is stuck to the metal support board 2, the pressure-sensitive adhesive sheet 4 may be pressed with respect to the metal support board 2 by applying a predetermined pressure thereto.

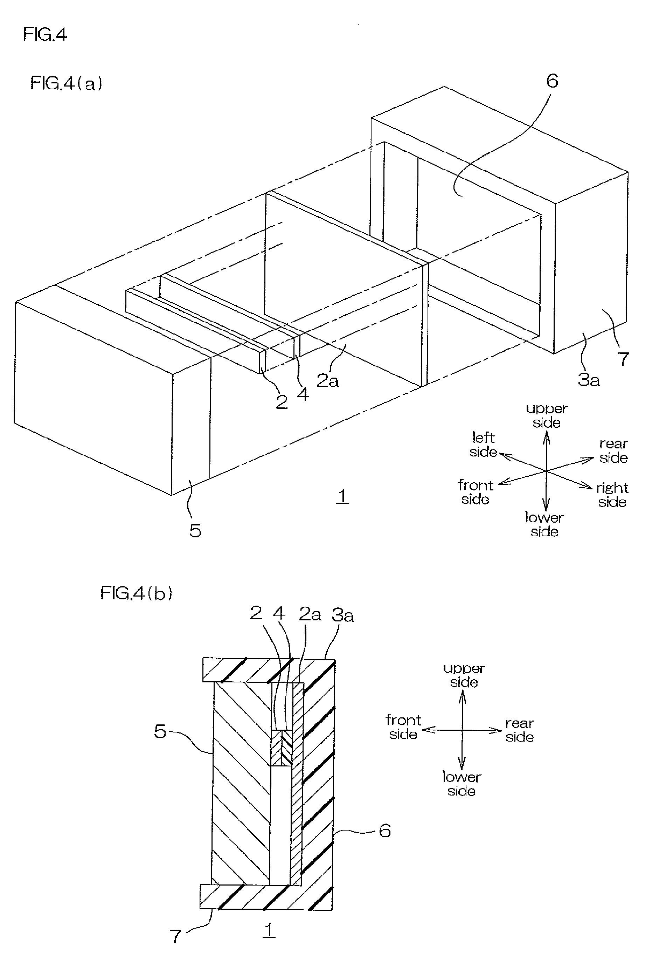

The casing 3 may be a box-shaped casing 3a (ref: FIG. 4 to be described later). In such a case, the image display unit 5 is housed in the box-shaped casing 3a.

In the above-described embodiment, the casing 3 is formed from a resin. However, the material thereof is not limited and can be formed from, for example, a metal. Examples of the metal include aluminum or an alloy thereof, a magnesium alloy, iron, or stainless steel.

When the casing 3 is formed from a metal, the casing 3 has a thickness of, for example, 0.1 mm or more, or preferably 0.3 mm or more, and of, for example, 2 mm or less, or preferably 1 mm or less. When the thickness of the casing 3 satisfies the above-described range, the strength of the image display device 1 is sufficiently developed by laminating the casing 3 and the pressure-sensitive adhesive sheet 4.

In the above-described embodiment, the metal support board 2 is illustrated and described as the first member of the present invention. Alternatively, for example, a resin support board 2 formed from a resin can be also used. An example of the resin includes a thermoplastic resin such as a polycarbonate (PC), an ABS, a PC/ABS alloy, a polyethylene terephthalate (PET), and a polypropylene (PP). Preferably, a PC, an ABS, and a PC/ABS alloy are used, or more preferably, a PC is used.

The resin support board 2 has a thickness of, for example, 0.1 mm or more, or preferably 0.5 mm or more, and of, for example, 5 mm or less, or preferably 2.5 mm or less.

When the resin support board 2 is used, preferably, the casing 3 is formed from a resin.

In the embodiment in FIG. 2, the image display unit 5 is in contact with the metal support board 2. Alternatively, for example, though not shown, the image display unit 5 and the metal support board 2 can be also disposed at spaced intervals to each other. In such a case, an auxiliary support portion, which is not shown, is provided in the circumference end portion of the image display unit 5 and the image display unit 5 is supported by the casing 3 via the auxiliary support portion. In view of high strength, preferably, as the embodiment in FIG. 2, the image display unit 5 is allowed to be in contact with the metal support board 2.

In the embodiment shown in FIGS. 1 and 2, the metal support board 2 is provided in the image display device 1. Alternatively, for example, as shown in FIG. 3, the pressure-sensitive adhesive sheet 4 can be directly stuck to the image display unit 5 without being provided with the metal support board 2.

In FIG. 3 and the figures subsequent to FIG. 3, the same reference numerals are provided for members and steps corresponding to each of those in FIGS. 1 and 2, and their detailed description is omitted.

The image display device 1 is provided with the casing 3 as the second member, the image display unit 5 as the first member, and the pressure-sensitive adhesive sheet 4 that is interposed therebetween. That is, in the image display device 1 in FIG. 3, the front surface of the pressure-sensitive adhesive sheet 4 is stuck to the image display unit 5 and the rear surface thereof is stuck to the casing 3. In the embodiment in FIG. 3, the same function and effect as that of the embodiment in FIGS. 1 and 2 can be achieved. That is, in the reinforcing structure of the image display device 1, the image display unit 5 is surely fixed to the casing 3 by the pressure-sensitive adhesive sheet 4, so that the strength is increased.

Also, as shown in FIGS. 4 (a) and 4 (b), a metal rear board 2a as the second member can be further provided in the image display device 1. The image display device 1 is provided with the box-shaped casing 3a; the image display unit 5 that is housed in the box-shaped casing 3a; the metal support board 2 as the first member; the pressure-sensitive adhesive sheet 4; and the metal rear board 2a, which is stuck to the rear surface of the pressure-sensitive adhesive sheet 4, as the second member.

The box-shaped casing 3a is formed into a box shape having an opening at the front side thereof. The box-shaped casing 3a includes a casing rear board 6 and a side wall 7 that is formed so as to extend from the circumference end portion of the box-shaped casing 3a toward the front side. The box-shaped casing 3a is formed from the same material as that of the above-described casing 3.

The casing rear board 6 is formed into the same shape as that of the above-described casing 3.

The side wall 7 is formed into a generally rectangular frame shape in front view. The inner surface thereof is in contact with the upper ends, the lower ends, the left ends, the right ends of the image display unit 5 and the metal rear board 2a. The length in the front-rear direction of the side wall 7 is set to be a length that is capable of housing a laminate of the image display unit 5, the metal support board 2, the pressure-sensitive adhesive sheet 4, and the metal rear board 2a.

The metal rear board 2a is formed into the same shape as that of the casing rear board 6 and is, when projected in the front-rear direction, overlapped with the image display unit 5. To be specific, the metal rear board 2a is, in front view, formed into the same shape as that of the image display unit 5. The metal rear board 2a is formed from the same material as that of the metal support board 2. In the embodiment in FIG. 4, the same function and effect as that of the embodiment in FIGS. 1 and 2 can be achieved. That is, in the reinforcing structure of the image display device 1, the metal support board 2 is surely fixed to the metal rear board 2a by the pressure-sensitive adhesive sheet 4, so that the strength is increased.

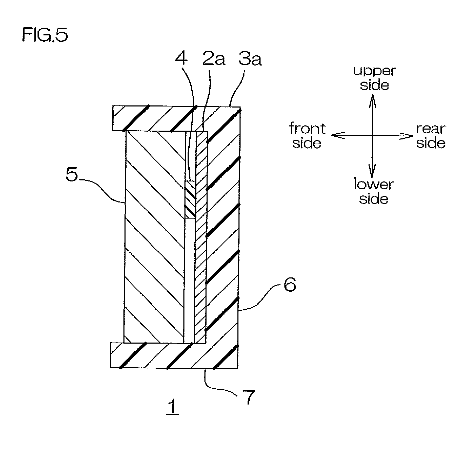

In the embodiment shown in FIG. 4, the metal support board 2 is provided in the image display device 1. Alternatively, for example, as shown in FIG. 5, the pressure-sensitive adhesive sheet 4 can be directly stuck to the image display unit 5 without being provided with the metal support board 2. The image display device 1 is provided with the box-shaped casing 3a; the image display unit 5, which is housed in the box-shaped casing 3a, as the first member; the pressure-sensitive adhesive sheet 4; and the metal rear board 2a as the second member. That is, in the image display device 1 in FIG. 5, the front surface of the pressure-sensitive adhesive sheet 4 is stuck to the image display unit 5 and the rear surface thereof is stuck to the metal rear board 2a. In the embodiment in FIG. 5, the same function and effect as that of the embodiment in FIG. 4 can be achieved. That is, in the reinforcing structure of the image display device 1, the image display unit 5 is surely fixed to the metal rear board 2a by the pressure-sensitive adhesive sheet 4, so that the strength is increased.

In the method for producing the image display device 1 shown in FIG. 1, the one surface of the pressure-sensitive adhesive sheet 4 is brought into contact with the metal support board 2 to be stuck and next, the other surface of the pressure-sensitive adhesive sheet 4 to which the metal support board 2 is stuck is brought into contact with the casing 3 to be stuck. Alternatively, for example, though not shown, the one surface of the pressure-sensitive adhesive sheet 4 is brought into contact with the metal support board 2 to be stuck and next, the casing 3 can be injected and molded at the other surface of the pressure-sensitive adhesive sheet 4 to which the metal support board 2 is stuck. To be specific, the resin that forms the casing 3 is injected to the other surface of the pressure-sensitive adhesive sheet 4 to be then laminated on the other surface of the pressure-sensitive adhesive sheet 4, so that the image display device 1 is capable of being produced.

In the reinforcing structure of the image display device in the present invention, only the first member, the second member, and the pressure-sensitive adhesive sheet 4 that is stuck therebetween need to be provided. In the embodiment in FIG. 1, for example, the laminate including the metal support board 2, the casing 3, and the pressure-sensitive adhesive sheet 4 that is stuck therebetween corresponds to the reinforcing structure of the image display device of the present invention. In this case, the image display unit 5 may be provided or may not be provided. In the embodiment in FIG. 4, for example, the laminate including the metal support board 2, the metal rear board 2a, and the pressure-sensitive adhesive sheet 4 that is stuck therebetween corresponds to the reinforcing structure of the image display device of the present invention. In this case, the image display unit 5 and the box-shaped casing 3a may be provided or may not be provided. In the embodiment in FIG. 5, for example, the laminate including the image display unit 5, the metal rear board 2a, and the pressure-sensitive adhesive sheet 4 that is stuck therebetween corresponds to the reinforcing structure of the image display device of the present invention. In this case, the box-shaped casing 3a may be provided or may not be provided.

Examples

While the present invention will be described hereinafter in further detail with reference to Examples and Comparative Examples, the present invention is not limited to these Examples and Comparative Examples. The values in Examples shown in the following can be replaced with the values (that is, the upper limit value or the lower limit value) described in the above-described embodiments.

Example 1

(Fabrication of Pressure-Sensitive Adhesive Sheet 4)

In accordance with the mixing formulation shown in Table 1, components each were blended by parts by mass basis to be kneaded with a mixing roll heated at 120°C in advance, so that a kneaded product of a pressure-sensitive adhesive composition was prepared.

Next, the prepared kneaded product of the pressure-sensitive adhesive composition was sandwiched between two pieces of release films. Then, the kneaded product was extended by applying pressure into a sheet shape by a press molding at 120°C to produce a pressure-sensitive adhesive sheet 4 having a thickness of 0.4 mm.

(Laminate of Reinforcing Structure of Image Display Device)

An aluminum board (described below, a first member), the pressure-sensitive adhesive sheet 4 fabricated as described above, and a polycarbonate board (described below, a second member) each were trimmed into pieces each having a size of 150 mm × 20 mm.

The release films on both surfaces of the pressure-sensitive adhesive sheet 4 were peeled off; one surface of the pressure-sensitive adhesive sheet 4 was stuck to the aluminum board at a normal temperature; and next, the other surface of the pressure-sensitive adhesive sheet 4 was stuck to the polycarbonate board at a normal temperature, so that a laminate (sequentially composed of the Al board, the pressure-sensitive adhesive sheet, and the PC board) in Example 1 was fabricated.

Aluminum board (Al board): trade name, an SK-A aluminum board, manufactured by SUMITOMO LIGHT METAL INDUSTRIES, LTD., a thickness of 0.5 mm

Polycarbonate board (PC board): trade name, a polycarbonate board, manufactured by TAKIRON Co., LTD., a thickness of 3.0 mm

(Measurement of Tensile Elastic Modulus)

The pressure-sensitive adhesive sheet 4 for measurement of the tensile elastic modulus was fabricated. That is, the pressure-sensitive adhesive sheet 4 having a thickness of 2 mm was fabricated in the same manner as that described above, except that the thickness of the pressure-sensitive adhesive sheet 4 was changed to 2 mm.

The pressure-sensitive adhesive sheet 4 for measurement of the tensile elastic modulus was stamped out into a dumbbell-shaped test piece (No. 1) specified in JIS K-6251. Then, a measurement was performed under the conditions of 23°C in conformity with JIS K-6251, so that a stress-strain diagram was drawn. The tensile elastic modulus (E) was calculated from the following relational equation of the stress ($\sigma$), the strain ($\varepsilon$), and the tensile elastic modulus (E).

$$\sigma = E \times \varepsilon$$

The results are shown in Table 1.

Example 2

A pressure-sensitive adhesive sheet 4 (a thickness of 0.4 mm) in Example 2 was fabricated in the same manner as in Example 1, except that the mixing formulation shown in Table 1 was used.

A test sheet for measurement of the tensile elastic modulus (a thickness of 2 mm) in Example 2 was fabricated in the same manner as in the measurement method of the tensile elastic modulus in Example 1 and the tensile elastic modulus of the sheet was calculated. The results are shown in Table 1.

A laminate (sequentially composed of the Al board, the pressure-sensitive adhesive sheet, and the PC board) in Example 2 was fabricated in the same manner as in Example 1.

Comparative Example 1

A pressure-sensitive adhesive sheet 4 having a thickness of 0.4 mm was prepared from a thermosetting epoxy resin (a resin composition for reinforcement of steel plate described in Example 3 in Japanese Unexamined Patent Publication No. 2005-139218).

A test sheet for measurement of the tensile elastic modulus (a thickness of 2 mm) in Comparative Example 1 was fabricated in the same manner as in the measurement method of the tensile elastic modulus in Example 1 and the tensile elastic modulus of the sheet was calculated. The results are shown in Table 1.

A laminate (sequentially composed of the Al board, the pressure-sensitive adhesive sheet, and the PC board) in Comparative Example 1 was fabricated in the same manner as in Example 1.

Comparative Example 2

A pressure-sensitive adhesive sheet 4 having a thickness of 0.4 mm was prepared from an acrylic resin (an acrylic foam tape, trade name: HYPERJOINT H9004, manufactured by NITTO DENKO CORPORATION).

A test sheet for measurement of the tensile elastic modulus (a thickness of 2 mm) in Comparative Example 2 was fabricated in the same manner as in the measurement method of the tensile elastic modulus in Example 1 and the tensile elastic modulus of the sheet was calculated. The results are shown in Table 1.

A laminate (sequentially composed of the Al board, the pressure-sensitive adhesive sheet, and the PC board) in Comparative Example 2 was fabricated in the same manner as in Example 1.

Comparative Example 3

(Reinforcing Sheet)

In accordance with the mixing formulation shown in Table 1, components each were blended by parts by mass basis to be kneaded with a mixing roll heated at 120°C in advance, so that a kneaded product of a pressure-sensitive adhesive composition was prepared.

Next, the prepared kneaded product of the pressure-sensitive adhesive composition was sandwiched between two pieces of release films. Then, the kneaded product was extended by applying pressure into a sheet shape by a press molding at 120°C to produce a pressure-sensitive adhesive sheet 4 having a thickness of 0.2 mm.

Next, the release films of the pressure-sensitive adhesive sheet 4 were peeled off and the pressure-sensitive adhesive sheet 4 was stuck to the entire one surface of a resin impregnated glass cloth having a thickness of 0.2 mm, so that a reinforcing sheet (composed of the pressure-sensitive adhesive sheet and the glass cloth) in Comparative Example 3 was fabricated.

(Image Display Device)

The reinforcing sheet obtained as described above, the Al board, and the PC board each were trimmed into pieces each having a size of 150 mm × 20 mm. The Al board and the PC board were the same as those used in Example 1.

Next, the release film on one surface of the reinforcing sheet was peeled off; the one surface (the surface of the pressure-sensitive adhesive sheet) of the reinforcing sheet was stuck to the Al board; and next, the other surface (the surface of the glass cloth) of the reinforcing sheet was brought into contact with the polycarbonate board, so that a laminate (sequentially composed of the Al board, the reinforcing sheet, and the PC board) in Comparative Example 3 was fabricated.

Comparative Example 4

A laminate in which the Al board and the PC board were laminated without using the pressure-sensitive adhesive sheet 4 was defined as the laminate in Comparative Example 4.

Comparative Example 5

A reinforcing sheet (a thickness of 0.4 mm) in Comparative Example 5 was fabricated in the same manner as in Example 1, except that the mixing formulation shown in Table 1 was used.

A test sheet for measurement of the tensile elastic modulus (a thickness of 2 mm) in Comparative Example 5 was fabricated in the same manner as in the measurement method of the tensile elastic modulus in Example 1 and the tensile elastic modulus of the sheet was calculated. The results are shown in Table 1.

A laminate (sequentially composed of the Al board, the pressure-sensitive adhesive sheet, and the PC board) in Comparative Example 5 was fabricated in the same manner as in Example 1, The reinforcing sheet in Comparative Example 5 was not compressively bonded to the Al board and the PC board at a normal temperature.

(Evaluation)

The bending strength of each of the laminates obtained in Examples and Comparative Examples was evaluated by a three point bending test. The results are shown in Table 1.

In the three point bending test, the laminate was disposed so that the Al board faced upwardly and the test piece was pressed from the Al board side with a distance between supporting points of 100 mm at a rate of 20 mm/min at the center (the lengthwise center and the widthwise center) of the test piece with an indenter having a diameter of 10 mm using a universal testing machine (manufactured by Minebea Co., Ltd.). The bending strength at a displacement of 2 mm, 4 mm, and 6 mm of the laminate was measured, respectively.

Table 1

[Table 1]

| | | | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|---|
| Pressure-Sensitive Adhesive Sheet (Pressure-Sensitive Adhesive Composition) | Thermoplastic Elastomer | H1041 | 40 | - | Thermosetting Resin | Acrylic Resin | 40 | - | 100 |
| | | H1052 | 60 | 100 | | | 60 | - | - |
| | Tackifier | ARKON P100 | 40 | - | | | 40 | - | 20 |
| | | ARKON M100 | 60 | - | | | 60 | - | 80 |
| | | Clearon P85 | - | 100 | | | - | - | - |
| | Filler | Calcium Carbonate | 140 | 140 | | | 100 | - | 100 |
| | | Asahi Carbon #50 | 1.5 | 1.5 | | | 1.5 | - | - |
| | Thickness (mm) | | 0.4 | 0.4 | 0.4 | 0.4 | 0.2* | - | 0.4 |
| Evaluation | Tensile Elastic Modulus (MPa) | | 1.2 | 0.5 | 0.08 | 0.12 | - | - | 12.5 |
| | Strength (N) | Displacement of 2 mm | 43 | 32 | 17 | 18 | 17 | 17 | 17 |
| | | Displacement of 4 mm | 83 | 60 | 34 | 37 | 34 | 33 | 34 |
| | | Displacement of 6 mm | 116 | 87 | 51 | 53 | 51 | 50 | 51 |

*A glass cloth (a thickness of 0.2 mm) is laminated on a pressure-sensitive adhesive sheet (a thickness of 0.2 mm).

In Table 1, the values for the components in the row of "Pressure-Sensitive Adhesive Sheet (Pressure-Sensitive Adhesive Composition)" show number of blended parts (parts by mass). For the components shown in Table 1, details are given in the following.

H1041: trade name "Tuftec H1041", a hydrogenated styrene-ethylene-butylene-styrene block copolymer, ratio of styrene/ethylene and butadiene: 30 mass %/70 mass %, MFR (190°C, 2.16 kg): 0.3 g/10 min, MFR (200°C, 5 kg): 3 g/10 min, manufactured by Asahi Kasei Chemicals Corporation.

H1052: trade name "Tuftec H1052", a hydrogenated styrene-ethylene-butylene-styrene block copolymer, ratio of styrene/ethylene and butadiene: 20 mass %/80 mass %, MFR (190°C, 2.16 kg): 3 g/10 min, MFR (200°C, 5 kg): 10 g/10 min, manufactured by Asahi Kasei Chemicals Corporation.

ARKON M100: trade name, an alicyclic saturated hydrocarbon resin, a softening point (ring and ball test) of 100°C, manufactured by Arakawa Chemical Industries, Ltd.

ARKON P100: trade name, an alicyclic saturated hydrocarbon resin, a softening point (ring and ball test) of 100°C, manufactured by Arakawa Chemical Industries, Ltd.

Clearon P85: trade name, a hydrogenated terpene resin (a terpene resin), a softening point (ring and ball test) of 85°C, a weight average molecular weight of 630 (GPC measurement calibrated with standard PS), a glass transition point (DSC method) of 28°C, manufactured by YASUHARA CHEMICAL CO., LTD.

Calcium Carbonate: a heavy calcium carbonate, manufactured by MARUO CALCIUM CO., LTD.

Asahi Carbon #50: trade name, carbon black, manufactured by ASAHI CARBON CO., LTD.

**Claims**

1. A reinforcing structure of an image display device comprising:

   reinforcement of an image display device by interposing a pressure-sensitive adhesive sheet having a tensile elastic modulus (JIS K-6251) at 23°C of 0.2 MPa or more and 10 MPa or less in a gap between a first member and a second member provided in the image display device and disposed in opposed relation to each other so as to be in contact with the first member and the second member.

2. The reinforcing structure of an image display device according to claim 1, wherein the pressure-sensitive adhesive sheet contains a thermoplastic elastomer.

3. The reinforcing structure of an image display device according to claim 2, wherein the thermoplastic elastomer is a polymer of a monomer containing styrene.

4. The reinforcing structure of an image display device according to claim 1, wherein the pressure-sensitive adhesive sheet further contains a filler and a tackifier.

5. The reinforcing structure of an image display device according to claim 1, wherein the size of the gap is 1 mm or less.

6. The reinforcing structure of an image display device according to claim 1, wherein the image display device is a notebook computer.

7. The reinforcing structure of an image display device according to claim 1, wherein the first member is made of a metal and the second member is made of a resin.

8. The reinforcing structure of an image display device according to claim 1, wherein the first member is an image display unit and the second member is made of a resin.

9. The reinforcing structure of an image display device according to claim 1, wherein the first member is an image display unit and the second member is made of a metal.

10. The reinforcing structure of an image display device according to claim 1, wherein the first member and the second member are made of a metal.

11. The reinforcing structure of an image display device according to claim 1, wherein the first member and the second member are made of a resin.

12. The reinforcing structure of an image display device according to claim 7, 8 or 11, wherein the resin contains a polycarbonate and an acrylonitrile-butadiene-styrene copolymer, or an alloy of polycarbonate and acrylonitrile-butadiene-styrene copolymer.

**13.** The reinforcing structure of an image display device according to claim 7, 8 or 11, wherein
one surface of the pressure-sensitive adhesive sheet is stuck to the first member and next, the second member is laminated by injecting and molding the resin at the other surface of the pressure-sensitive adhesive sheet.

**14.** A method for producing an image display device comprising the steps of:

preparing a pressure-sensitive adhesive sheet having a tensile elastic modulus (JIS K-6251) at 23°C of 0.2 MPa or more and 10 MPa or less, and
reinforcing an image display device by interposing the pressure-sensitive adhesive sheet in a gap between a first member and a second member provided in the image display device and disposed in opposed relation to each other so as to be in contact with the first member and the second member.

FIG.1

2 4

3

1

5

upper
side

left
side

rear
side

front
side

right
side

lower
side

FIG.2

2 4 3

5

1

upper
side

front
side

rear
side

lower
side

FIG.3

4 3

5

1

upper
side

front
side

rear
side

lower
side

FIG.4

FIG.4(a)

6

2a

2 4

3a

7

5

1

upper
side

left
side

rear
side

front
side

right
side

lower
side

FIG.4(b)

2 4 2a 3a

upper
side

front
side

rear
side

lower
side

5

6

7

1

FIG.5

4  2a  3a

5

6

7

1

upper
side

front
side ⟵  ⟶ rear
side

lower
side

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012235192 A
- JP 2007313879 A
- JP 2005139218 A